# EUROPÄISCHE PATENTSCHRIFT

(11) **EP 1 585 584 B1**
(45) Veröffentlichungstag und Bekanntmachung des Hinweises auf die Patenterteilung: **03.01.2007**
(21) Anmeldenummer: 04703760.1
(22) Anmeldetag: 21.01.2004
(51) Int. Cl.: B01D 1/00

(54) **ADSORPTIONSTROCKNER MIT INTEGRIERTEM VORFILTER**
ADSORPTION DRYER WITH INTEGRATED PRE-FILTER
DESSICCATEUR A ADSORPTION AVEC UN PREFILTRE INTEGRE

(30) Priorität: 24.01.2003 DE 10302696
(43) Veröffentlichungstag der Anmeldung: 19.10.2005
(73) Patentinhaber: Zander Aufbereitungstechnik GmbH & Co.KG, 45219 Essen (DE)
(72) Erfinder: PRIESS, Günter, 47807 Krefeld (DE)
(74) Vertreter: Knauf, Rudolf
(86) Internationale Anmeldenummer: PCT/EP2004/000437
(87) Internationale Veröffentlichungsnummer: WO 2004/064982

(56) Entgegenhaltungen:
- DE-A- 3 534 161
- GB-A- 1 505 479
- US-A- 4 127 395
- US-A- 5 667 566

## Beschreibung

Die Erfindung betrifft einen kaltregenerierten Adsorptionstrockner, dem über ein Vorfilter verunreinigte, feuchte Druckluft zu- und von dem sie getrocknet ab- und einem Verbraucher zuführbar ist, mit mindestens zwei mit einem Trockenmittel gefüllten Kammern, die mittels einer ein- und ausgangsseitigen Ventilsteuerung im Wechsel von Adsorption auf Regeneration umschaltbar sind, wobei die jeweils auf Regeneration geschaltete Kammer über eine Ausblasleitung, die von der Kammer unterhalb des Trockenmittels ausgeht, druckentlastbar ist.

Kaltregenerierte Adsorptionstrockner sind seit langem bekannt (Fachbuch: "Druckluftaufbereitung mit Microfilter und Adsorptionstrockner" von Werner Strauß-Zunker, 1. Auflage Januar 1996, ISBN 3-00-000388-6, Seiten 160 bis 169; EP 0 123 061 A1). Der Vorteil solcher Trockner besteht darin, dass sie im Aufbau einfach sind. Sie benötigen im Gegensatz zu warmregenerierten Trocknern kein Heizsystem für die für die Regeneration benötigte Luft. Nachteilig ist allerdings, dass die Umschaltzyklen von Adsorption auf Regeneration vergleichsweise kurz sind. Um den Wirkungsgrad solcher Adsorptionstrockner zu verbessern, insbesondere um die Belastung des Trockenmittels mit Verunreinigungen, wie Feststoff- und Ölpartikel oder Kondensat in der zu trocknenden Druckluft vom Trockenmittel fernzuhalten, aber auch um die Reinheit der getrockneten Luft weiter zu verbessern, sind bei einem bekannten Trockner außerhalb der mit dem Trockenmittel gefüllten Kammern Vor- und Nachfilter vorgesehen. Solche Vor- und Nachfilter bedürfen von Zeit zu Zeit der Reinigung oder Erneuerung.

Darüber hinaus ist ein Adsorptionstrockner bekannt
(DE 76 17 052 U, der in einem Gehäuse übereinander angeordnete Kammern aufweist. In der unteren Kammer sind ein sich über den gesamten Querschnitt der Kammer erstreckendes mechanisches Vorfilter und darüber das Adsorptionsmittel angeordnet. Aus dieser Behandlungskammer für feuchte Luft gelangt getrocknete Luft in die darüber angeordnete Kammer und von hier in die als Druckluftsammelbehälter dienende obere Kammer. Sobald der Druck im Druckluftsammelbehälter einen oberen Grenzwert erreicht hat, schaltet die Zufuhr von zu entfeuchtender Luft durch einen Verdichter ab, und eine Rückströmung findet statt. Dabei kommt es zu einer Regeneration des Adsorptionsmittels und einer Reinigung des mechanischen Vorfilters.

GB-A-1 505 479 (ALSTHOM ATLANTIQUE) offenbart einen kaltregenerierten Adsorptionstrockner, dem über ein Vorfilter verunreinigte, feuchte Druckluft zuführbar ist. Er umfasst weiterhin einen Trockenmittelbehälter, der die vom Vorfilter kommende Luft entfeuchtet und von dem die Luft an einen Verbraucher abgegeben werden kann.

Der Erfindung liegt die Aufgabe zugrunde, einen kaltregenerierten Adsorptionstrockner der eingangs genannten Art sowohl hinsichtlich seines Wirkungsgrades zu verbessern, ihn möglichst wartungsfrei zu gestalten und ihm einen kompakten Aufbau zu verleihen.

Diese Aufgabe wird bei einem kaltregenerierten Adsorptionstrockner der eingangs genannten Art dadurch gelöst, dass in den Kammern unterhalb des Trockenmittels als Vorfilter und oberhalb des Trockenmittels als Nachfilter jeweils ein sich über den gesamten Querschnitt jeder Kammer erstreckendes, luftdurchlässiges Paket aus einem Verbund von Fasern, Fäden und/oder Draht integriert ist, wobei das Trockenmittel zwischen dem Vorfilter und dem Nachfilter festgelegt ist.

Durch die Integration des mechanischen Vor- und Nachfilters in jede Kammer und die Festlegung des Trockenmittels zwischen diesen Filtern ergibt sich ein kompakter Aufbau des Adsorptionstrockners. Sein Wirkungsgrad wird bei gleichzeitiger Verminderung der Wartung erhöht, weil der integrierte Vorfilter bei jeder Umschaltung von Adsorption auf Regeneration durch die bei Regeneration im Gegenstrom zur Adsorption hindurchströmende Luft gereinigt wird, indem vor allem bei schlagartiger Druckentspannung in der Kammer die abgeschiedenen Partikel mitgerissen werden. Gleichzeitig wird wegen der Druckentspannung die Temperatur in der Kammer und damit auch die des Vorfilters abgesenkt. Diese Temperaturabsenkung hat den Effekt, daß am Beginn der nächsten Adsorptionsphase ein Teil des in der zu entfeuchtenden Druckluft enthaltenen Wasserdampfes schon an dem gekühlten Vorfilter kondensiert. Dadurch wird das Trockenmittel entlastet. Da dieser Effekt nur in einer kurzen Phase unmittelbar nach Umschalten von Regeneration auf Adsorption auftritt, kann er verstärkt werden, wenn möglichst kurze Betriebszyklen gewählt werden, so daß sein Anteil an einem Zyklus größer wird. Der Effekt der Entlastung des Trockenmittels kann allerdings auch für längere Betriebszyklen ausgenutzt werden.

Der Nachfilter sorgt dafür, dass trockene Feststoffpartikel in der getrockneten Luft zurückgehalten werden. Auch dieser Filter wird automatisch bei jeder Druckentlastung der Kammer für die Regeneration durch den Luftstrom in der Atmosphäre gereinigt. Durch die Festlegung des Adsorptionsmittels zwischen dem Vorfilter und dem Nachfilter, insbesondere durch Verpressung, wird verhindert, dass das in der Regel aus Granulat bestehende Trockenmittel aufgewirbelt wird und es zu einem die Standzeit und Reinheit der Luft beeinträchtigenden Abrieb kommt.

Die Wirksamkeit des Adsorptionstrockners kann weiter dadurch gesteigert werden, daß das Fäden- oder Drahtpaket insbesondere des Vorfilters adsorptionsfähiges Material umfaßt.

Nach einer weiteren Ausgestaltung der Erfindung ist das Fäden- oder Drahtpaket ein Gewebe, Gestricke, Gewirke oder Geflecht. Das Paket sollte eine in Strömungsrichtung der Luft bei der Adsorption zunehmend feiner werdende Porosität haben. Diese Zunahme kann stufenlos aber auch dadurch erreicht werden, dass das Paket aus einzelnen Lagen verschiedener Porosität aufgebaut ist.

Im folgenden wird die Erfindung anhand einer Zeichnung näher erläutert, die einen kaltregenerierten Adsorptionstrockner in schematischer Darstellung zeigt.

Der kaltregenerierte Adsorptionstrockner weist zwei im Wechselbetrieb betriebene Kammern 1, 2 auf, die mit einem Trockenmittel 3, 4 gefüllt sind. In jeder Kammer 3, 4 ist unterhalb des Trockenmittels 1, 2 ein sich über den gesamten Querschnitt der Kammer 1, 2 erstreckender Vorfilter 5, 6 angeordnet, der aus mehreren Lagen eines Gewirkes, Gewebes, Gestrickes oder Geflechtes aus Draht besteht, das von unten nach oben eine zunehmend feinere Porosität aufweist. In entsprechender Weise ist in den Kammern 1, 2 oberhalb des Trockenmittels 3, 4 ein Nachfilter 7, 8 angeordnet, das ebenfalls einen mehrlagigen Aufbau hat. Auch in diesem Fall sollten die Poren von unten nach oben feiner werden.

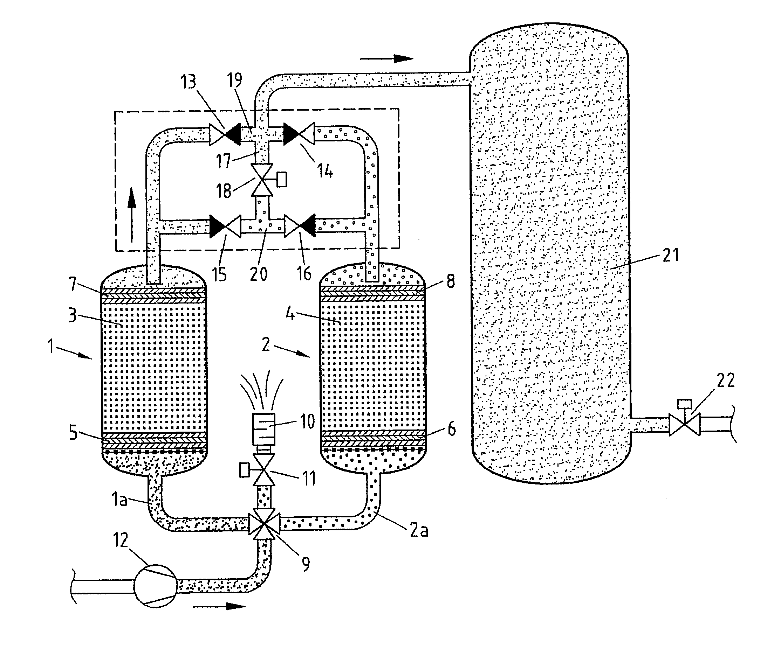

An den Eintrittsseiten der beiden Kammern 1, 2 ist eine Ventilkombination aus einem Vierwegeumschaltventil 9 und einem zu einer Ausblasdüse 10 führenden Drosselventil 11 angeordnet. Je nach Schaltstellung des Umschaltventils 9 wird von einem Gebläse 12 der einen oder anderen Kammer 1, 2 mit Feuchtigkeit und Verunreinigungen, wie Feststoff- und/oder Ölpartikel beladene Luft unter Druck zugeführt. In dem in der Zeichnung dargestellten Betriebszyklus ist dies die Kammer 1. Die zu reinigende und zu entfeuchtende Luft wird beim Passieren des Vorfilters 5 von Feststoff-, Ölund Feuchtigkeitspartikeln gereinigt. Beim weiteren Passieren des Trockenmittels 1 wird die Luft entfeuchtet. Sofern in der dann trockenen Luft noch trockene Feststoffpartikel enthalten sind, werden sie von dem Nachfilter 7 zurückgehalten. In der Zeichnung ist der Unterschied zwischen der mit Feuchtigkeit und anderen Verunreinigungen beladenen Luft und der entfeuchteten gereinigten Luft durch dickere oder dünnere Punktierung verdeutlicht.

An den Austrittsseiten der beiden Kammern 1, 2 ist eine weitere Ventilkombination angeordnet. Diese besteht aus zwei parallel liegenden, paarweise gegensinnig wirkenden Rückschlagventilen 13, 14 bzw. 15, 16 und einer Verbindungsleitung 17 mit einem Drosselventil 18, über die zwischen dem Rückschlagventilen 13, 14 bzw. 15, 16 eines jeden Paares angeordnete Verbindungsleitungen 19, 20 miteinander verbunden sind.

In dem dargestellten Betriebszyklus kann die gereinigte und entfeuchtete Luft über das offene Rückschlagventil 13 zu einem Verbraucher gelangen, in diesem Fall über einen Speicher 21, und ein Drosselventil 22. Außerdem kann die Luft über das Drosselventil 18 und das offene Rückschlagventil 16 zu der anderen Kammer 2 gelangen. Das Drosselventil 18 bewirkt dabei eine Aufteilung des entfeuchteten und gereinigten Mediums in einen Hauptstrom, der dem Speicher 21 zugeführt wird, und einen Teilstrom, der der Kammer 2 zugeführt wird. Der der Kammer 2 zugeführte Teilstrom der gereinigten und entfeuchteten Luft ist in der Zeichnung durch kleine leere Kreise dargestellt. Die entfeuchtete und gereinigte Luft wird beim Passieren des Trockenmittels 4 mit Feuchtigkeit beladen, was graphisch dadurch deutlich gemacht ist, dass die Kreise an der Austrittsseite der Kammer 2 gefüllt sind. Über das Ventil 9 und das Drosselventil 11 gelangt die dann mit Feuchtigkeit beladene Luft über eine Ausblasleitung 2a zu der Ausblasdüse 6.

Eine Besonderheit bei der Erfindung besteht nun darin, dass in dem dargestellten Betriebszyklus die zu entfeuchtende und zu reinigende Luft vor dem Passieren des Trockenmittels 3 das integrierte Vorfilter 6 und nach dem Trocknen das integrierte Nachfilter 7 passiert. Dabei werden Feststoffpartikel sowohl am Vorfilter 5 als auch am Nachfilter 7 zurückgehalten. Am Vorfilter 5 werden allerdings auch Öltröpfchen und Wassertröpfchen zurückgehalten. In der ersten Phase der Adsorption kommt es sogar zu einer Kondensation der in der Luft enthaltenden Feuchtigkeit am Vorfilter 5, weil dieser Vorfilter 5 kühler als die unter Druck zugeführte zu entfeuchtende Luft ist. Dieser Effekt beruht darauf, dass nach dem Umschalten beispielsweise der Kammer 1 von Adsorption auf Regeneration die in der Kammer 1 zunächst unter Druck stehende Luft durch schnelles Öffnen des Umschaltventils 11 zur Ausblasleitung 1a und zur Ausblasdüse 10 die Luft in der Kammer 1 entspannt wird, was mit einer starken Abkühlung verbunden ist. Da die Luft dabei das Vorfilter 5 umgekehrt durchströmt, kühlt sie dieses ab, so dass es in der nächsten Phase der Adsorption kühler ist als die unter Druck zugeführte, zu entfeuchtende Luft. Es kommt also zu einer Kondensation der feuchten Luft an dem Vorfilter 5. Das bedeutet eine Entlastung des Trockenmittels 3. Ein weiterer Effekt ist mit der schlagartigen Entspannung der Luft in der Kammer 1 infolge der Umschaltung der Kammer 1 von Adsorption auf Regeneration verbunden. Die ausströmende Luft reißt nämlich Schmutzpartikel aus dem Nachfilter 7 und dem Vorfilter 6 mit und befördert sie in die Atmosphäre.

## Patentansprüche

1. Kaltregenierter Adsorptionstrockner, dem über ein Vorfilter (5, 6) verunreinigte, feuchte Druckluft zuund von dem sie getrocknet ab- und einem Verbraucher zuführbar ist, mit mindestens zwei mit einem Trockenmittel (3, 4) gefüllten Kammern (1, 2), die mittels einer ein- und ausgangsseitigen Ventilsteuerung (9, 13, 14, 15, 16, 18) im Wechsel von Adsorption auf Regeneration umschaltbar sind, wobei die jeweils auf Regeneration geschaltete Kammer (1, 2) über eine Ausblasleitung (1a, 2a), die von unterhalb des Trockenmittels (3, 4) ausgeht, druckentlastbar ist, **dadurch gekennzeichnet, dass** in den Kammern (1, 2) unterhalb des Trockenmittels (3, 4) als Vorfilter (5, 6) und oberhalb des Trockenmittels (3, 4) als Nachfilter (7, 8) jeweils ein sich über den gesamten Querschnitt jeder Kammer (1, 2) erstreckendes, luftdurchlässiges Paket aus einem Verbund von Fasern, Fäden und/oder Draht integriert ist, wobei das Trockenmittel zwischen dem Vorfilter (5, 6) und dem Nachfilter (7, 8) festgelegt ist.

2. Adsorptionstrockner nach Anspruch 1, **dadurch gekennzeichnet, dass** das Trockenmittel zwischen dem Vorfilter (5, 6) und dem Nachfilter (7, 8) verpresst ist.

3. Adsorptionstrockner nach einem der Ansprüche 1 - 2, **dadurch gekennzeichnet, dass** Fäden- oder Drahtpaket ein Gewebe, Gestricke, Gewirke oder Geflecht ist.

4. Adsorptionstrockner nach einem der Ansprüche 1 - 3, **dadurch gekennzeichnet, dass** das Paket eine in Strömungsrichtung bei der Adsorption zunehmend feinere Porosität hat.

5. Adsorptionstrockner nach Anspruch 4, **dadurch gekennzeichnet, dass** das Fäden- oder Drahtpaket (5 - 8) aus mehreren Lagen verschiedener Porosität besteht.

6. Adsorptionstrockner nach einem der Ansprüche 1 - 5, **dadurch gekennzeichnet, dass** das Fäden- oder Drahtpaket (5 - 8) mindestens des Vorfilters (5, 6) ein adsorptionsfähiges Material umfasst.

## Claims

1. Cold-regenerated adsorption dryer, to which contaminated, wet compressed air can be fed via a pre-filter (5, 6) and from which it can be fed out, when dried, and fed to a consuming device, having at least two chambers (1, 2) filled with a drying agent (3, 4), which chambers (1, 2) can be changed alternately from adsorption to regeneration by means of valve-type control means (9, 13, 14, 15, 16, 18) at the inlet and outlet ends, the chamber (1, 2) which is switched to regeneration in the given case being able to be relieved of pressure by means of a vent line (1a, 2a) which runs off from below the drying agent (3, 4), **characterised in that** there are incorporated in the chambers (1, 2), below the drying agent (3, 4) to act as pre-filters (5, 6) and above the drying agent (3, 4) to act as post-filters (7, 8), respective packs permeable to air which extend over the entire cross-section of each chamber (1, 2) and which comprise a composite structure of fibres, filaments and/or wire, the drying agent being fixed in position between the pre-filter (5, 6) and the post-filter (7, 8).

2. Adsorption dryer according to claim 1, **characterised in that** the drying agent is pressed between the pre-filter (5, 6) and the post-filter (7, 8).

3. Adsorption dryer according to either of claims 1 and 2, **characterised in that** the pack of filaments or wire is a woven, finely knitted, coarsely knitted or plaited structure.

4. Adsorption dryer according to any one of claims 1 to 3, **characterised in that**, in the adsorption, the porosity of the pack becomes increasingly fine in the direction of flow.

5. Adsorption dryer according to claim 4, **characterised in that** the pack of filaments or wire (5 - 8) comprises a plurality of layers of different porosities.

6. Adsorption dryer according to any one of claims 1 to 5, **characterised in that** the pack of filaments or wire (5 - 8) at least of the pre-filter (5, 6) comprises a material capable of adsorption.

## Revendications

1. Dessiccateur à adsorption, régénéré à froid, qui peut recevoir par un préfiltre (5,6), l'air comprimé humide, souillé et évacuer l'air séché, vers un utilisateur, avec au moins deux chambres (1, 2), remplies d'un agent desséchant (3, 4), qui peuvent être commutée sur la régénération à la place de l'adsorption, par un réglage par vanne côtés entrée et sortie (9, 13, 14, 15, 16, 18), où la chambre (1, 2) en position de régénération peut chaque fois, être détendue par une conduite de purge (1a, 2a), qui part de sous l'agent desséchant (3, 4), **caractérisé en ce que** dans les chambres (1, 2), en dessous de l'agent desséchant (3, 4) comme préfiltre (5, 6) et au-dessus de l'agent desséchant (3, 4) comme filtre ultérieur (7, 8), est intégré chaque fois, un ensemble perméable à l'air, s'étendant sur toute la section transversale de chaque chambre (1, 2), de fibres, fils et/ou brins, où l'agent desséchant est disposé entre le préfiltre (5, 6) et le filtre ultérieur (7, 8).

2. Dessiccateur à adsorption selon la revendication 1, **caractérisé en ce que** l'agent desséchant est pressé entre le préfiltre (5, 6) et le filtre ultérieur (7, 8).

3. Dessiccateur à adsorption selon l'une des revendications 1 - 2, **caractérisé en ce que** l'ensemble de fils ou brins est un tissé, un tricot, un tissu à maille ou un tissage.

4. Dessiccateur à adsorption selon l'une des revendications 1 - 3, **caractérisé en ce que** l'ensemble a une porosité plus fine de manière croissante en direction de l'écoulement lors de l'absorption.

5. Dessiccateur à adsorption selon la revendication 4, **caractérisé en ce que** l'ensemble de fils ou brins (5 - 8) consiste en plusieurs couches de différentes porosités.

6. Dessiccateur à adsorption selon l'une des revendications 1 - 5, **caractérisé en ce que** l'ensemble de fils ou brins (5 - 8) au moins du préfiltre (5, 6) se compose d'un matériau capable d'adsorption.
